Europäisches Patentamt

European Patent Office

Office européen des brevets

(11) Numéro de publication : **0 492 703 B1**

# (12) FASCICULE DE BREVET EUROPEEN

(45) Date de publication du fascicule du brevet :
**02.11.95 Bulletin 95/44**

(51) Int. Cl.⁶ : **H04L 1/04,** H04L 5/06

(21) Numéro de dépôt : **91203286.9**

(22) Date de dépôt : **13.12.91**

(54) **Système de prévention d'erreurs pour la transmission de données sur plusieurs canaux.**

(30) Priorité : **21.12.90 FR 9016105**

(43) Date de publication de la demande :
**01.07.92 Bulletin 92/27**

(45) Mention de la délivrance du brevet :
**02.11.95 Bulletin 95/44**

(84) Etats contractants désignés :
**DE FR GB IT SE**

(56) Documents cités :
**US-A- 4 234 956**
**SOVIET INVENTIONS ILLUSTRATED, Section El., semaine 8434, Derwent Publications Ltd. , London GB.**

(73) Titulaire : **T.R.T. TELECOMMUNICATIONS RADIOELECTRIQUES ET TELEPHONIQUES**
**88, rue Brillat Savarin**
**F-75013 Paris (FR)**

(84) **FR**
Titulaire : **Philips Electronics N.V.**
**Groenewoudseweg 1**
**NL-5621 BA Eindhoven (NL)**

(84) **DE GB IT SE**

(72) Inventeur : **Bonnerot, Georges**
**Société Civile S.P.I.D.,**
**156, Boulevard Haussmann**
**F-75008 Paris (FR)**

(74) Mandataire : **Chaffraix, Jean et al**
**Société Civile S.P.I.D.**
**156, Boulevard Haussmann**
**F-75008 Paris (FR)**

EP 0 492 703 B1

# Description

La présente invention concerne un système de transmission de mots de données utilisant une pluralité de canaux de transmission parmi laquelle on distingue au moins deux canaux de transmission principaux et au moins un canal de transmission supplémentaire, système formé d'une part, d'une partie émission comportant des codeurs pour coder selon un code détecteur d'erreur, les données à transmettre sur chaque canal principal et sur chaque canal supplémentaire et d'autre part, d'au moins une partie réception formée de circuits détecteurs d'erreur.

Un tel système trouve d'importantes applications notamment dans le domaine des faisceaux hertziens. Dans ce domaine, les différents canaux sont des canaux fréquentiels de sorte qu'ils peuvent subir le phénomène de "fading" sélectif. Ce phénomène n'affecte souvent qu'un seul des canaux. Les informations perdues par ce canal peuvent être aussi transmises sur un autre canal dit canal de secours ou canal supplémenraire.

Un système de ce genre, n'appartenant pas au domaine des faisceaux hertziens, est décrit dans le brevet anglais 1 532 753. Dans ce système connu, des données organisées en mots binaires sont transmises, accompagnées d'un code de parité dans un premier canal de transmission et des données supplémentaires des mêmes mots binaires ayant des éléments binaires de valeur opposée sont transmises sur le canal supplémentaire. La comparaison, à la réception, des éléments binaires provenant des canaux de transmission et des canaux supplémentaires permet de déceler rapidement une erreur de transmission.

Un autre système de ce genre est illustré par SOVIET INVENTIONS ILLUSTRATED, Section E1, semaine 8434, Derwent Publications Ltd., London, GB.

La présente invention propose un système de ce genre dans lequel on a prévu des moyens pour éviter les erreurs de transmission, même si le nombre de canaux de transmission est supérieur à un.

Pour cela, le système de l'invention est remarquable en ce qu'il est prévu au niveau de la partie émission un circuit de combinaison pour combiner les données à transmettre sur au moins deux canaux principaux tandis qu'au moins un canal supplémentaire est utilisé pour transmettre les données combinées et en ce qu'il est prévu au niveau de la partie réception :

- des circuits de décombinaison pour fournir des répliques des données transmises pour chacun des canaux de transmission principaux à partir des données transmises par les autres canaux de transmission principaux et le canal supplémentaire,
- des circuits d'aiguillage affectés à chaque canal de transmission principal pour fournir à des circuits d'utilisation soit les répliques soit les données transmises,
- un circuit de commande coopérant avec les circuits détecteurs d'erreur de transmission pour commander les circuits d'aiguillage.

La description suivante en regard des dessins annexés, le tout donné à titre d'exemple non limitatif, fera bien comprendre comment l'invention peut être réalisée.

La figure 1 représente un système de transmission conforme à l'invention.

La figure 2 montre en détail la structure d'un circuit d'aiguillage faisant partie du système montré à la figure 1.

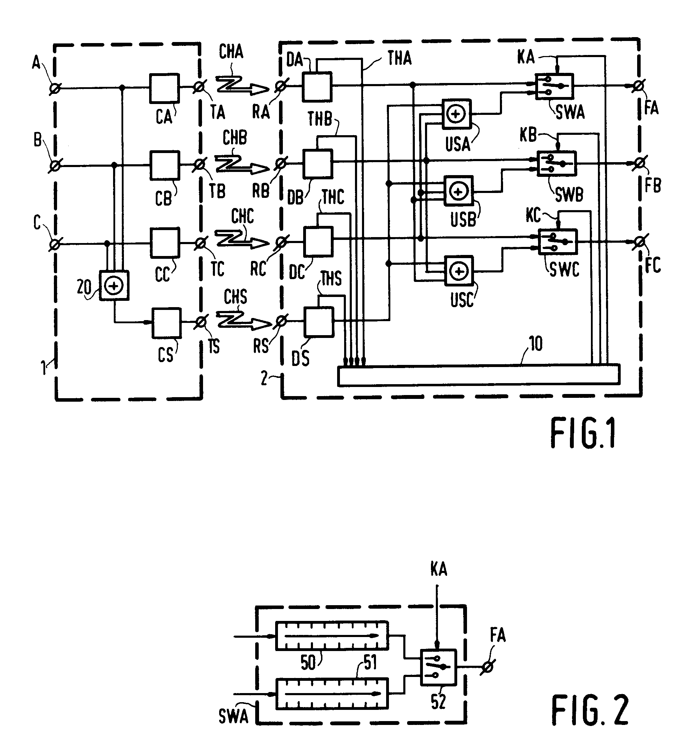

La référence 1, à la figure 1 indique la partie émission et la référence 2 une partie réception du système de l'invention. La partie 1 est munie de trois accès A, B, C qui sont des données à transmettre, par l'intermédiaire de canaux CHA, CHB, CHC représentés à cette figure 1 par des flèches. Ces données sont synchrones entre elles. Un autre canal CHS transporte des données supplémentaires.

Dans le domaine des faisceaux hertziens tous les canaux sont en multiplex fréquentiel et empruntent la voie hertzienne. En cas de fading sélectif un seul de ces canaux peut être affecté et le canal CHS peut venir au secours du canal défaillant.

Pour se prémunir des erreurs de transmission il est nécessaire de protéger les données à transmettre par des codes détecteurs/correcteurs d'erreur (par exemple un code de Hamming). Ce codage est effectué pour les données appliquées aux bornes A, B, C au moyen des codeurs CA, CB et CC ; le tout, codé, est disponible aux bornes TA, TB et TC ; la modulation et l'émission ne sont pas explicitées, car conventionnelles et ne faisant pas partie de l'invention. Les données reçues au niveau de la partie réception se trouvent au niveau des bornes RA, RB, RC. Là, des décodeurs DA, DB et DC analysent les mots reçus et fournissent respectivement sur des fils THA, THB, THC les signaux suivants :

EC corrigée

ENC présence d'erreur non corrigée, ou

OK pas d'erreur

L'invention utilise principalement le signal ENC.

Pour différencier ces signaux, on mettra entre parenthèses la lettre A ou B ou C ou S, différenciant ainsi le canal CHA, CHB, CHC et CHS. Les données à la sortie des décodeurs sont appliquées à des circuits d'aiguillage SWA, SWB et SWC.

Les données restituées sont disponibles pour l'utilisation à des accès FA, FB et FC. La position des circuits d'aiguillage SWA, SWB et SWC est commandée par des signaux transmis sur des fils KA, KB et KC respectivement. Ces commandes sont déterminées par un circuit de commande 10 à partir des signaux transmis par les fils THA, THB et THC.

Conformément à l'invention, il est prévu au niveau de la partie émission 1 un circuit de combinaison 20 pour combiner les données à transmettre sur les canaux CHA, CHB et CHC, ce circuit de combinaison 20 étant un additionneur modulo 2. Il est prévu aussi des circuits de décombinaison USA, USB et USC dont les sorties sont reliées aux circuits d'aiguillage SWA, SWB et SWC. Ce circuit de décombinaison forme une réplique des données reçues, transmises par les canaux CHA, CHB et CHC de sorte que le circuit de commande 10 commande la position du circuit d'aiguillage pour obtenir des données aux sorties exemptes d'erreur.

Les données à la sortie du circuit de combinaison 20 sont codées au moyen d'un codeur CS qui opère de la même manière que les codeurs CA, CB et CC, tandis que du côté réception un décodeur DS restitue ces données en opérant de la même manière que les décodeurs DA, DB et DC.

Les circuits de décombinaison USA, USB et USC effectuent une opération "addition modulo 2" sur les données transmises par CHB, CHC et CHS, par CHA, CHC et CHS et par CHA, CHB et CHS.

Le circuit de commande 10 est conçu pour :
- connecter l'accès FA avec les sorties des circuits USA si ENC(A) est actif et si ENC(S) est non actif (ainsi que ENC(B) et ENC(C),
- connecter l'accès FA à la sortie du décodeur DA si ENC(A) est non actif.

Ceci s'applique aussi pour les autres accès.

La présente invention repose sur les considérations suivantes.

Si on considère un instant et que l'on appelle à cet instant les données $XA_i$, $XB_i$ et $XC_i$ présentes aux sorties des codeurs CA, CB et CC la donnée $XS_i$ à la sortie du circuit 20 s'écrit :

$$XS_i = XA_i \oplus XB_i + \oplus XC_i$$

$\oplus$ : addition modulo 2

Soit, maintenant, $XA_i'$, $XB_i'$, $XC_i'$ et $XS_i'$ les données transmises.

Si il n'y a pas d'erreur de transmission on a :

$$XA_i = XA_i'$$
$$XB_i = XB_i'$$
$$XC_i = XC_i'$$
$$XS_i = XS_i'$$

et l'on peut montrer que, à l'entrée, la donnée $XRA_i$ est égale à :

$$XRA_i = XB_i \oplus XC_i \oplus XS_i$$
$$= XB_i \oplus XC_i \oplus XA_i \oplus XB_i \oplus XC_i$$
$$XRA_i = XA_i$$

De même on montrera :

$$XRB_i = XB_i$$
$$XRC_i = XC_i$$

Comme le résultat de l'analyse effectuée par le décodeur prend un certain temps et est relatif à un certain nombre de bits sur les mots transmis, on a prévu des circuits de retard (des registres à décalage) 50 et 51 à l'intérieur des circuits d'aiguillage.

La figure 2 montre en détail le circuit d'aiguillage SWA. L'entrée du circuit 50 est reliée à la sortie du décodeur DA et celle du circuit 51, à celle du circuit USA. Les sorties de ces circuits 50 et 51 sont reliées aux entrées d'un commutateur 52 proprement dit à deux positions dont la commande est reliée au fil KA.

Le système de l'invention comporte en outre, au niveau de la partie réception, des moyens d'inhibition pour inhiber les données à fournir aux circuits d'utilisations.

## Revendications

1. Système de transmission de mots de données utilisant une pluralité de canaux de transmission parmi laquelle on distingue au moins deux canaux de transmission principaux (CHA, CHB, CHC) et au moins un canal de transmission supplémentaire (CHS), système formé d'une part, d'une partie émission (1) comportant des codeurs (CA, CB, CC, CS) pour coder, selon un code détecteur d'erreur, les données à transmettre sur chaque canal principal et sur chaque canal supplémentaire et d'autre part, d'au moins une partie réception (2) formée de circuits détecteurs (DA, DB, DC, DS) d'erreur, le système comportant en outre, au niveau de la partie émission (1), un circuit de combinaison (20) pour combiner les données à transmettre sur au moins deux canaux principaux (CHA, CHB, CHC) tandis qu'au moins un canal supplémentaire (CHS) est utilisé pour transmettre les données combinées, caractérisé en ce qu'il est prévu au niveau de la partie réception (2) :
   - des circuits de décombinaison (USA, USB, USC) pour fournir des répliques des données transmises pour chacun des canaux de transmission principaux (CHA, CHB, CHC) à partir des données transmises par les autres canaux de transmission principaux et le canal supplémentaire,
   - des circuits d'aiguillage (SWA, SWB, SWC) affectés à chaque canal de transmission principal pour fournir à des circuits d'utilisation (FA, FB, FC) soit les répliques soit les données transmises,
   - un circuit de commande (10) coopérant avec les circuits détecteurs d'erreur de transmission pour commander les circuits d'aiguillage.

2. Système de transmission selon la revendication 1, caractérisé en ce que le circuit de combinaison (20) et les circuits de décombinaison (USA, USB, USC) sont des additionneurs "modulo 2".

3. Système de transmission selon la revendication 1 ou 2, caractérisé en ce qu'au niveau de la partie réception (2) il est prévu des moyens d'inhibition pour inhiber les données à fournir aux circuits d'utilisation.

**Patentansprüche**

1. Ein System der Datenwortübertragung unter Verwendung einer Vielzahl an Übertragungskanälen, von denen man mindestens zwei Hauptübertragungskanäle (CHA, CHB, CHC) und mindestens einen Zusatzübertragungskanal (CHS) unterscheidet, das System besteht einerseits aus einem Übertragungsteil (1) mit Codierern (CA, CB, CC, CS) zur Codierung der auf jedem Hauptkanal und auf jedem Zusatzkanal zu übertragenden Daten nach einem Fehlerdetektorcode, und andererseits aus mindestens einem aus Fehlerdetektorschaltungen (DA, DB, DC, DS) zusammengesetzten Empfangsteil (2), das System verfügt dazu auf dem Niveau des Empfangsteils (1) über eine Verbindungsschaltung (20) zur Verbindung der zu übertragenden Daten über mindestens zwei Hauptkanäle (CHA, CHB, CHC), während mindestens ein Zusatzkanal (CHS) zur Übertragung der verbundenen Daten verwendet wird, mit dem Merkmal folgender, auf dem Niveau des Empfangsteils (2) vorgesehenen Vorkehrungen:
   - Trennschaltungen (USA, USB, USC) zur Lieferung von Duplikaten der übertragenen Daten jedes Hauptübertragungskanals (CHA, CHB, CHC), ausgehend von den über die anderen Hauptübertragungskanäle und den Zusatzkanal übertragenen Daten,
   - jedem Hauptübertragungskanal zugeordnete Weichenschaltungen (SWA, SWB, SWC), zur Lieferung von Duplikaten oder der übertragenen Daten an die Anwendungsschaltungen (FA, FB, FC),
   - eine Steuerschaltung (10), die zur Steuerung der Weichenschaltungen zusammen mit den Fehlerdetektorschaltungen arbeitet.

2. Ein Übertragungssystem laut Anspruch 1, mit dem Merkmal, daß es sich bei den Verbindungsschaltungen (20) und den Trennschaltungen (USA, USB, USC) um Addierer "Modulo 2" handelt.

3. Ein System laut Anspruch 1 oder 2, mit dem Merkmal, daß auf dem Niveau des Empfangsteils (2) eine mögliche Sperrung vorgesehen ist, um die Datenübertragung zu den Anwendungsschaltungen zu unterbinden.

**Claims**

1. Data word transmission system utilizing a plurality of transmission channels among which at least two main transmission channels (CHA, CHB, CNC) and at least one auxiliary transmission channel (CHS) are distinguished, the system including, on the one hand, a transmitting section (1) comprising encoders (CA, CB, CC, CS) for encoding, according to an error detection code, the data to be transmitted over each main channel and over each auxiliary channel and, on the other hand, at least one receiving section (2) constituted by error detecting circuits (DA, DB, DC, DS), the system further comprising in the transmitting section (1) a combining circuit (201) for combining the data to be transmitted over at least two main channels (CHA, CHB, CHC), whereas at least one auxiliary channel (CHS) is used for transmitting the combined data, characterized in that there is provided in the receiving section (2):
   - decombining circuits (USA, USB, USC) for producing replicas of the transmitted data for each of the main transmission channels based upon the data transmitted over the other main transmission channels and the auxiliary channel,
   - switching circuits (SWA, SWB, SWC) associated to each main transmission channel for supplying either the replicas or the transmitted data to utilization circuits (FA, FB, FC),
   - a control circuit (10) cooperating with the transmission error detection circuits for controlling the switching circuits.

2. Transmission system as claimed in Claim 1, characterized in that the combining circuit (20) and the decombining circuits (USA, USB, USC) are modulo-2 adders.

3. Transmission system as claimed in Claim 1 or 2, characterized in that the receiving section (2) comprises inhibiting means for inhibiting the data to be supplied to the utilization circuits.

FIG.1

FIG. 2